# EUROPÄISCHE PATENTSCHRIFT

(11) **EP 3 093 593 B1**
(45) Veröffentlichungstag und Bekanntmachung des Hinweises auf die Patenterteilung: **05.06.2024**
(21) Anmeldenummer: 16165069.2
(22) Anmeldetag: 13.04.2016
(51) Int. Cl.: F25D 23/02

(54) **HAUSHALTSGERÄT MIT EINER TÜRSTEUERUNG**
DOMESTIC APPLIANCE WITH A DOOR CONTROLLER
APPAREIL MENAGER COMPRENANT UNE COMMANDE DE PORTE

(30) Priorität: 12.05.2015 DE 102015208830
(43) Veröffentlichungstag der Anmeldung: 16.11.2016
(73) Patentinhaber: BSH Hausgeräte GmbH, 81739 München (DE)
(72) Erfinder: Kempfle, Stephan, 89352 Ellzee (DE)

(56) Entgegenhaltungen:
- CN-A- 103 983 081
- DE-A1-102013 211 722
- JP-A- 2007 017 018
- JP-A- 2014 047 930
- KR-A- 20010 092 060
- KR-A- 20050 107 956
- US-A1- 2011 023 511

## Beschreibung

Die vorliegende Erfindung betrifft ein Haushaltsgerät mit einer Türsteuerung.

Haushaltsgeräte, wie zum Beispiel Kühl- oder Gefrierschränke, bestehen oft aus einem Gerätekorpus mit einem Innenraum, der durch eine Tür erreichbar ist. Um das der Tür zu unterstützen können elektronische Türöffnungshilfen verwendet werden. Diese bestehen meist aus einem Türaktuator mit einer in dem Haushaltsgerät integrierten Aktuatorsteuerung. Eine solche Türöffnungshilfe für ein Kältegerät ist zum Beispiel aus DE 10 1096 061 083 A1 bekannt.

Die Offenlegungsschrift DE 10 2013 211 722 A1 zeigt ein Haushaltskältegerät mit einem Wasser- und/oder Eisspender.

Dokumente KR 2005 0107956 A, KR 2001 0092060 A und JP 2007 017018 A offenbaren Haushaltsgeräte mit Türaktuator.

Die Offenlegungsschrift JP 2014 047930 A zeigt ein Kältegerät.

Die Offenlegungsschrift US 2011/023511 A1 zeigt ein Kältegerät.

Es ist die Aufgabe der vorliegenden Erfindung, ein Haushaltsgerät mit einer Türsteuerung anzugeben, die ein fehlerhaftes Aktivieren des Türaktuators vermeidet.

Diese Aufgabe wird durch einen Gegenstand mit den Merkmalen nach den unabhängigen Ansprüchen gelöst. Vorteilhafte Ausführungsformen sind Gegenstand der abhängigen Ansprüche, der Beschreibung und der Zeichnungen.

Gemäß einem ersten Aspekt wird die erfindungsgemäße Aufgabe durch ein Haushaltgerät mit einem Gerätekorpus, einer an dem Gerätekorpus drehbar gelagerten Tür, einem Türaktuator zum Antreiben der Tür, einer aktivierbaren Gerätefunktionskomponente sowie einer Aktuatorsteuerung zum Aktivieren des Türaktuators gelöst, bei dem die Aktuatorsteuerung ausgebildet ist, einen Aktivitätszustand der Gerätefunktionskomponente zu überwachen, und bei dem die Aktuatorsteuerung ansprechend auf einen Empfang eines Aktivierungssignals zum Aktivieren des Türaktuators ausgebildet ist, den Türaktuator nur dann zu aktivieren, wenn die aktivierbare Gerätefunktionskomponente inaktiv ist. Dadurch wird beispielsweise der technische Vorteil erreicht, dass ein ungewolltes Aktivieren des Türaktuators bei Benutzung der Gerätefunktionskomponente vermieden werden kann.

Bei dem Haushaltsgerät kann es sich um ein Gerät für private Haushalte oder für Unternehmen, beispielsweise im Gastronomie- oder Hotelbereich, handeln. Es kann sich um ein Kältegerät zur Lagerung von Lebensmitteln und/oder Getränken, beispielsweise ein Kühlschrank, ein Gefrierschrank oder eine Kühlgefrierkombination handeln. Ferner kann es sich um ein Gerät zur Zubereitung von Lebensmitteln, beispielsweise ein Gargerät oder einen Ofen, ein Reinigungsgerät für Geschirr oder Kleidungsstücke, beispielsweise eine Geschirrspülmaschine oder eine Waschmaschine, oder ein Trockengerät handeln.

Die Tür kann auf einer Seitenfläche des Gerätekorpus, wie bei einem Gefrierschrank, oder auf dessen Oberseite, wie bei einer Gefriertruhe, angeordnet sein. Die Tür kann über einen Griff verfügen, der aus der Tür heraussteht oder als Griffmulde ausgebildet ist. Ferner kann die Tür grifflos sein, beispielsweise in einem Haushaltsgerät welches Teil eines grifflosen Küchenkonzepts oder einer Einbauküche ist. Die Tür und/oder der Gerätekorpus können über Dichtungen verfügen, so dass die geschlossene Tür den Gerätekorpus dichtend berührt.

Bei dem Türaktuator kann es sich um einen Elektromotor, beispielsweise einen elektrischen Schrittmotor, handeln. Der Türaktuator kann die Tür in Öffnungs- und/oder in Schließrichtung antreiben. Die Aktuatorsteuerung kann den Türaktuator aktivieren oder deaktivieren und Steuerbefehle übermitteln, beispielsweise Steuerbefehle zum Öffnen oder Schließen der Tür. Ferner kann die Aktuatorsteuerung einen Prozessor und einen Speicher umfassen. Die Aktuatorsteuerung kann im Gerätekorpus oder in der Tür angeordnet sein.

In einer weiteren vorteilhaften Ausführungsform des Haushaltsgerätes sind die Gerätefunktionskomponente und die Aktuatorsteuerung an eine Kommunikationsleitung, insbesondere an einen Kommunikationsbus, angeschaltet. Dadurch wird beispielsweise der technische Vorteil erreicht, dass eine Kommunikation zwischen der Gerätefunktionskomponente und der Aktuatorsteuerung ermöglicht wird.

Bei dem Kommunikationsbus kann es sich um einen Teil einer Kommunikationsleitung handeln, welche im Haushaltsgerät auch von anderen Gerätekomponenten verwendet wird, beispielsweise dem Kühlsystem in einem Kühlgerät und/oder einem im Gerät vorhandenen Anzeigeschirm.

In einer weiteren vorteilhaften Ausführungsform des Haushaltsgerätes ist die Gerätefunktionskomponente eine Eisausgabekomponente, eine Wasserausgabekomponente oder eine Türverriegelung.

In einer weiteren vorteilhaften Ausführungsform des Haushaltsgerätes sind eine Aktivitätssteuerung der Gerätefunktionskomponente, insbesondere ein Tastschalter oder ein berührungssensitiver Anzeigeschirm, und/oder die Gerätefunktionskomponente an der Tür angeordnet. Dadurch wird beispielsweise der technische Vorteil erreicht, dass eine effiziente Bedienung der Gerätefunktionskomponente durch einen Benutzer erfolgen kann.

Gemäß der Erfindung ist ein Sensor zum Erfassen einer Betätigung der Tür durch einen Benutzer, nämlich eines Andrückens der Tür oder eines Ziehens der Tür, vorgesehen und ausgebildet, das Aktivierungssignal zum Aktivieren des Türaktuators bei Erfassung der Betätigung an die Aktuatorsteuerung auszusenden. Dadurch wird beispielsweise der technische Vorteil erreicht, dass ein Türöffnungswunsch rasch erkannt werden kann.

Die Aktivierung des Türaktuators beim Andrücken der Tür, im sogenannten Push-Modus, kann bei Türen ohne Türgriff eingesetzt werden. Die Aktivierung des Türaktuators beim Ziehen an der Tür, im sogenannten Pull-Modus, kann nach ziehen an einem Türgriff erfolgen. Ferner kann eine Zeit für das Offenhalten der Tür nach dem Öffnen eingestellt werden. Die Offenhalte-Zeit der Tür kann beispielsweise auf 1, 2, 3, 4, 5, 6, 7, 8, 9, oder 10 Sekunden eingestellt werden. Nach Ablauf dieser Zeit kann der Türaktuator die Tür schließen.

In einer weiteren vorteilhaften Ausführungsform des Haushaltsgerätes ist die Sensitivität des Sensors einstellbar. Dadurch wird beispielsweise der technische Vorteil erreicht, dass ein versehentliches Aktivieren des Türaktuators vermieden werden kann.

Die Sensitivität des Sensors kann so eingestellt werden, dass ein gewöhnlicher Tastendruck auf einen Tastschalter zur Bedienung der Gerätekomponente nicht vom Sensor als Betätigung der Tür interpretiert wird. Ferner können unterschiedliche Sensitivitätslevel eingestellt werden, beispielsweise hohe, mittlere, oder geringe Sensitivität, um das Haushaltsgerät auf unterschiedliche Benutzer und Bedienszenarien einzustellen. Es können auch jeweils unterschiedliche Sensitivitätslevel für den Push- und den Pull-Modus festgelegt werden.

In einer weiteren vorteilhaften Ausführungsform des Haushaltsgerätes weist das Haushaltsgerät eine Gerätesteuerung zum Steuern der Gerätefunktionskomponente auf, sind die Aktuatorsteuerung und die Gerätesteuerung kommunikationstechnisch verbunden, und ist die Gerätesteuerung ausgebildet, den Aktivitätszustand der Gerätefunktionskomponente an die Aktuatorsteuerung zu übermitteln. Dadurch wird beispielsweise der technische Vorteil erreicht, dass die Aktuatorsteuerung über den Status der Gerätefunktionskomponente effizient informiert werden kann.

Die Gerätesteuerung kann am Gerätekorpus oder an der Tür angeordnet sein. Ferner kann die Gerätesteuerung einen Prozessor und/oder einen Speicher, beispielsweise einen Flash-Speicher, umfassen. Bei der Kommunikationstechnischen Verbindung kann es sich um eine Kommunikationsleitung, insbesondere einen Kommunikationsbus handeln. Ferner können Parameter der Aktuatorsteuerung in der Gerätesteuerung abgespeichert sein.

In einer weiteren vorteilhaften Ausführungsform des Haushaltsgerätes ist die Aktuatorsteuerung ausgebildet, eine Mehrzahl von aktuellen Geräteparametern des Haushaltsgerätes oder der Gerätefunktionskomponente von der Gerätesteuerung, insbesondere nach elektrischer Einschaltung des Haushaltsgerätes oder nach einer Zurücksetzung des Türaktuators, in einer Initialisierungssequenz abzurufen. Dadurch wird beispielsweise der technische Vorteil erreicht, dass nach einschalten oder Zurücksetzten des Haushaltsgerätes die Aktuatorsteuerung selbstständig in einen passenden Aktivitätszustand übergehen kann. Die Aktuatorsteuerung kann in dieser Initialisierungssequenz eine Reihe von Anfragen über die Kommunikationsverbindung an die Gerätesteuerung senden, woraufhin die Gerätesteuerung der Aktuatorsteuerung auf jede Anfrage mit einem entsprechenden Parameter antwortet.

In einer weiteren vorteilhaften Ausführungsform ist die Initialisierungssequenz aus folgenden Anfragen aufgebaut, welche Schritt für Schritt abgefragt werden: In einem ersten Schritt erfolgt eine Anfrage nach der Art des Haushaltsgerätes, worauf die Gerätesteuerung mit der Seriennummer antwortet. In einem zweiten Schritt erfolge eine Anfrage nach dem Status der Türverrieglung, worauf die Gerätesteuerung mit dem Status "offen" oder "verriegelt" antwortet, wobei diese Anfrage auch erfolgen kann wenn in dem Haushaltsgerät keine Türverriegelung vorhanden ist. In einem dritten Schritt erfolgt eine Anfrage nach dem Status der Aktuatorsteuerung, worauf die Gerätesteuerung mit dem Status "aktiviert" oder "deaktiviert" antwortet. In einem vierten Schritt erfolgt eine Anfrage nach dem Arbeitsmodus der Aktuatorsteuerung, worauf die Gerätesteuerung mit "Push-" oder "Pull-Modus" antwortet. In einem fünften Schritt erfolgt eine Anfrage nach der Türoffenhaltezeit, worauf die Gerätesteuerung beispielsweise mit 1, 2, 3, 4, 5, 6, 7, 8, 9 oder 10 Sekunden antwortet, wobei die Anfrage nach der Türoffenhaltezeit insbesondre im Push-Modus erfolgt. In einem sechsten Schritt erfolgt eine Anfrage nach dem Sensitivitätslevel des Sensors im Push-Modus, worauf die Gerätesteuerung beispielsweise mit "hoch", "mittel", oder "niedrig" antwortet. In einem siebten Schritt erfolgt eine Anfrage nach dem Sensitivitätslevel des Sensors im Pull-Modus, worauf die Gerätesteuerung beispielsweise mit "hoch", "mittel", oder "niedrig" antwortet. Gemäß einer Ausführungsform geht die Aktuatorsteuerung erst dann in einen aktiven Zustand über, wenn ihr eine Antwort auf alle Anfragen vorliegt. Gemäß einer weiteren Ausführungsform kann die Gerätesteuerung mindestens einen Antwortparameter der Schritte zwei, drei, vier, fünf, sechs und sieben der obigen Initialisierungssequenz auch nach einer Statusänderung der Aktuatorsteuerung und/oder der Gerätesteuerung und/oder der Gerätefunktionskomponente an die Aktuatorsteuerung übersenden.

In einer weiteren vorteilhaften Ausführungsform des Haushaltsgerätes ist die Gerätefunktionskomponente ausgebildet, bei einer Aktivierung der Gerätefunktionskomponente einen Aktivierungshinweis an die Aktuatorsteuerung auszusenden, und dass die Aktuatorsteuerung ausgebildet ist, bei Vorliegen des Aktivierungshinweises von der Gerätefunktionskomponente und bei Empfang des Aktivierungssignals zum Aktivieren des Türaktuators die Aktivierung des Türaktuators zu unterbinden. Dadurch wird beispielsweise der technische Vorteil erreicht, dass die Aktuatorsteuerung ein ungewolltes Aktivieren des Türaktuators bei Bedienung der Gerätefunktionskomponente erkennen und verhindern kann.

In einer weiteren vorteilhaften Ausführungsform des Haushaltsgerätes ist die Aktuatorsteuerung ausgebildet, bei Empfang des Aktivierungssignals zum Aktivieren des Türaktuators und bei einer mittels einer Türverriegelung verriegelter Tür ein Warnsignal, insbesondere ein akustisches oder ein optisches Warnsignal, auszugeben. Dadurch wird beispielsweise der technische Vorteil erreicht, dass eine rasche Warnung eines Benutzers, welcher eine verriegelte Tür öffnen will, erfolgen kann.

In einer weiteren vorteilhaften Ausführungsform des Haushaltsgerätes weist die Aktuatorsteuerung ein Bedienfeld zur Parametrisierung des Türaktuators auf. Dadurch wird beispielsweise der technische Vorteil erreicht, dass die Aktuatorsteuerung vom Benutzer effizient auf das Bedienszenario eingestellt werden können.

Bei dem Bedienfeld kann es sich um ein Touch-Display handeln. Bei den Parametern kann es sich um den Arbeitsmodus der Aktuatorsteuerung, beispielsweise Push- oder Pull-Modus, die Türoffenhaltezeit, oder das Sensitivitätslevel des Sensors handeln.

In einer weiteren vorteilhaften Ausführungsform des Haushaltsgerätes ist der Türaktuator mittels des Bedienfeldes manuell deaktivierbar. Dadurch wird beispielsweise der technische Vorteil erreicht, dass eine rein manuelle Bedienung der Tür ohne Türaktuator erfolgen kann.

In einer weiteren vorteilhaften Ausführungsform des Haushaltsgerätes bilden die Gerätesteuerung und die Aktuatorsteuerung ein gemeinsames Steuerelement. Dadurch wird beispielsweise der technische Vorteil erreicht, dass die technische Komplexität der Steuerelemente in dem Haushaltsgerät verringert werden kann.

Das gemeinsame Steuerelement kann beispielsweise einen einzigen Prozessor und einen einzigen Speicher aufweisen, die zur Gerätesteuerung und zur Aktuatorsteuerung genutzt werden. Das gemeinsame Steuerelement kann am Gerätekorpus oder an der Tür angeordnet sein. Ferner kann das gemeinsame Steuerelement ein Bedienfeld zur Steuerung und/oder Parametrisierung der Gerätesteuerung und der Aktuatorsteuerung aufweisen.

Gemäß einem zweiten Aspekt wird die erfindungsgemäße Aufgabe durch ein Verfahren zum Steuern eines Türaktuators zum Antreiben einer Tür eines Haushaltsgerätes, das einen Gerätekorpus, an dem die Tür drehbar gelagert ist, eine Aktuatorsteuerung zum Steuern des Türaktuators und eine aktivierbare Gerätefunktionskomponente aufweist gelöst, bei dem ein Aktivitätszustand der Gerätefunktionskomponente überwacht wird, und bei dem der Türaktuator nur dann aktiviert wird, wenn die aktivierbare Gerätefunktionskomponente inaktiv ist. Dadurch wird beispielsweise der technische Vorteil erreicht, dass durch eine effiziente Steuerung des Türaktuators eine ungewollte Aktivierung desselben vermieden werden kann.

Der Türaktuator wird bei Betätigung der Tür aktiviert. Dadurch wird beispielsweise der technische Vorteil erreicht, dass das Öffnen und/oder Schließen der Tür durch den Türaktuator erfolgen kann.

Ausführungsbeispiele der Erfindung sind in den Zeichnungen dargestellt und werden im Folgenden näher beschrieben.

Es zeigen:
Fig. 1 eine schematische Darstellung des Haushaltsgerätes gemäß einer Ausführungsform;
Fig. 2 ein schematisches Diagramm der Kommunikationsverbindungen in einem Haushaltsgerät gemäß einer Ausführungsform;
Fig. 3 ein schematisches Diagramm einer Kommunikation zwischen Komponenten eines Haushaltsgerätes gemäß einer Ausführungsform;
Fig. 4 ein schematisches Diagramm einer Kommunikation zwischen Komponenten eines Haushaltsgerätes gemäß einer Ausführungsform.

Das Haushaltgerät 100 hat ein Gerätekorpus 101, eine an dem Gerätekorpus 101 drehbar gelagerte Tür 103, einen Türaktuator 105 zum Antreiben der Tür 103, eine aktivierbare Gerätefunktionskomponente 107 sowie eine Aktuatorsteuerung 109 zum Aktivieren des Türaktuators 105, bei dem die Aktuatorsteuerung 109 ausgebildet ist, einen Aktivitätszustand der Gerätefunktionskomponente 107 zu überwachen, und bei dem die Aktuatorsteuerung 109 ansprechend auf einen Empfang eines Aktivierungssignals zum Aktivieren des Türaktuators 105 ausgebildet ist, den Türaktuator 105 nur dann zu aktivieren, wenn die aktivierbare Gerätefunktionskomponente 107 inaktiv ist.

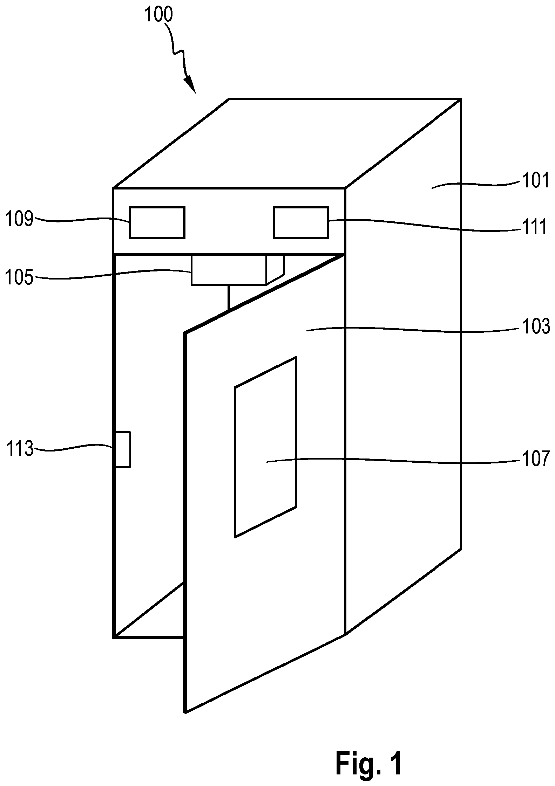

Fig.1 zeigt eine schematische Darstellung eines Haushaltsgerätes 100 gemäß einer Ausführungsform. Das Haushaltsgerät 100 besteht aus einem Gerätekorpus 101 mit einer Tür 103 und einer in die Tür 103 integrierten Gerätefunktionskomponente 107. Ferner beinhaltet der Gerätekorpus 101 einen Türaktuator 105 und eine Aktuatorsteuerung 109, sowie eine Gerätesteuerung 111.

Bei dem Haushaltsgerät 100 kann es sich um ein Gerät für private Haushalte oder für Unternehmen, beispielsweise im Gastronomie- oder Hotelbereich, handeln. Es kann sich um ein Kältegerät zur Lagerung von Lebensmitteln und/oder Getränken, beispielsweise ein Kühlschrank, ein Gefrierschrank oder eine Kühlgefrierkombination handeln. Ferner kann es sich um ein Gerät zur Zubereitung von Lebensmitteln, beispielsweise ein Gargerät oder einen Ofen, ein Reinigungsgerät für Geschirr oder Kleidungsstücke, beispielsweise eine Geschirrspülmaschine oder eine Waschmaschine, oder ein Trockengerät handeln.

Die Tür 103 kann auf einer Seitenfläche des Gerätekorpus 101, wie bei einem Gefrierschrank, oder auf dessen Oberseite, wie bei einer Gefriertruhe, angeordnet sein. Die Tür 103 kann über einen Griff verfügen, der aus der Tür 103 heraussteht oder als Griffmulde ausgebildet ist. Ferner kann die Tür 103 grifflos sein, beispielsweise in einem Haushaltsgerät welches Teil eines grifflosen Küchenkonzepts oder einer Einbauküche ist. Die Tür 103 und/oder der Gerätekorpus 101 können über Dichtungen verfügen, so dass die geschlossene Tür 103 den Gerätekorpus 101 dichtend berührt.

Bei dem Türaktuator 105 kann es sich um einen Elektromotor, beispielsweise einen elektrischen Schrittmotor, handeln. Der Türaktuator 105 kann die Tür 103 in Öffnungs- und/oder Schließrichtung antreiben. Die Aktuatorsteuerung 109 kann den Türaktuator 105 aktivieren oder deaktivieren und Steuerbefehle übermitteln, beispielsweise Steuerbefehle zum Öffnen oder Schließen der Tür 103. Ferner kann die Aktuatorsteuerung 109 einen Prozessor und einen Speicher umfassen. Die Aktuatorsteuerung 109 kann im Gerätekorpus 101 oder in der Tür 103 angeordnet sein.

Gemäß der Erfindung ist eine Aktivitätssteuerung 401 zur Steuerung der Gerätefunktionskomponente 107 an der Tür 103 angeordnet. Diese Aktivitätssteuerung 401 kann ein Tastschalter oder ein berührungssensitiver Anzeigeschirm, beispielsweise ein Touch-Display sein.

Gemäß einer weiteren Ausführungsform ist die Gerätefunktionskomponente 107 eine Eis- oder eine Wasserausgabekomponente. Dabei kann es sich um einen Eisbeziehungsweise einen Wasser-Dispenser handeln, welcher nach Aktivierung durch die Aktivitätssteuerung 401 Eiswürfel beziehungsweise Wasser ausgibt. Gemäß einer weiteren Ausführungsform ist die Gerätefunktionskomponente 107 eine Türverriegelung. Diese Türverriegelung kann als Türsicherung, beispielsweise in einer Kindersicherung, ausgestaltet sein und zur Aktivierung und/oder Deaktivierung eine Codeeingabe in ein Bedienfeld der Aktivitätssteuerung 401 verlangen.

Gemäß einer weiteren Ausführungsform ist die Gerätefunktionskomponente 107 an der Tür 103 angeordnet, wie in der schematischen Darstellung in Fig. 1 gezeigt. Die Gerätefunktionskomponente 107 kann auf beliebiger Höhe an der Tür 103 angebracht sein. Gemäß einer weiteren Ausführungsform kann die Gerätefunktionskomponente 107 oder ein Teil der Gerätefunktionskomponente 107 auch im Gerätekorpus 101 angeordnet sein, beispielsweise oberhalb der Tür 103 oder an einer Seitenfläche des Haushaltsgerätes 100 an der keine Tür 103 angebracht ist.

Gemäß der Erfindung enthält das Haushaltsgerät 100 einen Sensor 113 zur Erfassung einer Betätigung der Tür 103. Bei diesem Sensor 113 kann es sich um einen Drucksensor handeln. Der Sensor 113 kann entweder an der Tür 103 oder am Gerätekorpus 101 angeordnet sein. Insbesondere kann der Sensor 113 im Übergang zwischen Tür 103 und Gerätekorpus 101 angeordnet sein. Der Sensor 113 kann ein Ziehen an der Tür 103 und/oder ein Drücken auf die Tür 103 registrieren und als Reaktion den Türaktuator 105 aktivieren. Dabei können unterschiedliche Sensitivitätslevel für das Ziehen, den sogenannten Pull-Modus, und das Drücken, den sogenannten Push-Modus, eingestellt werden. Beispielsweise kann die Sensitivität beim Push-Modus erhöht werden, falls an der Tür 103 der Tastschalter einer Aktivitätssteuerung 401 angebracht ist, um ein versehentliches Öffnen der Tür 103 bei Betätigung des Tastschalters zu vermeiden. Gemäß einer weiteren Ausführungsform wir die Tür nach Aktivierung des Türaktuators 105 durch den Sensor 113 für eine bestimmte Zeit offengehalten, insbesondere nach Öffnen der Tür 103 im Push-Modus. Diese Offenhaltezeit kann in der Aktuatorsteuerung 109 hinterlegt sein. Nach Ablauf der Zeit kann die Aktuatorsteuerung 109 den Türaktuator 105 in Schließrichtung aktivieren und somit die Tür schließen.

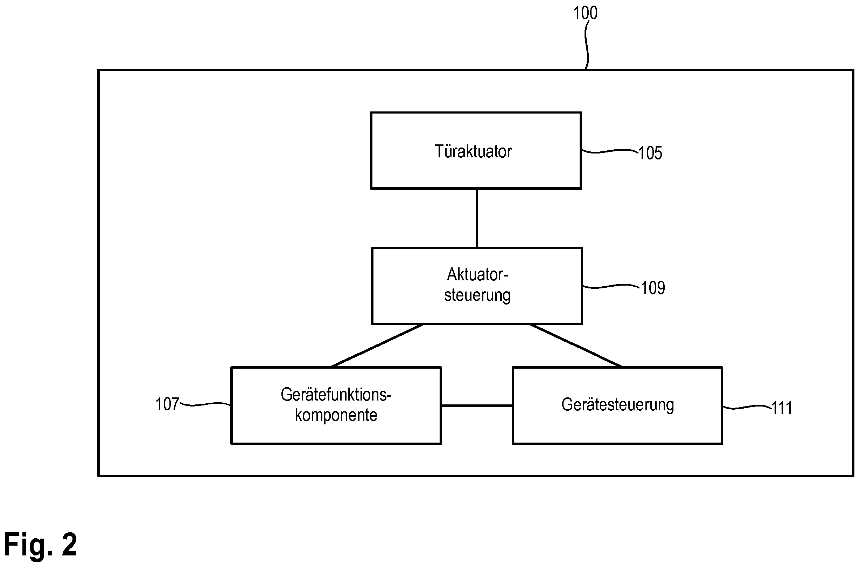

Fig. 2 zeigt ein schematisches Diagramm der Kommunikationsverbindungen in einem Haushaltsgerät 100 gemäß einer Ausführungsform. Die Kommunikationsverbindung in Fig. 2 verbindet eine Aktuatorsteuerung 109 mit einem Türaktuator 105, einer Gerätefunktionskomponente 107 und einer Gerätesteuerung 111.

Gemäß einer Ausführungsform sind die Gerätefunktionskomponente 107 und die Aktuatorsteuerung 109 an eine Kommunikationsleitung, insbesondere einen Kommunikationsbus, angeschlossen. Hierfür kann eine Leitungsanordnung, welche eine Kommunikationsleitung beinhaltet, die Gerätefunktionskomponente 107 mit der Aktuatorsteuerung 109 verbinden.

Gemäß einer weiteren Ausführungsform weist das Haushaltsgerät 100 eine Gerätesteuerung 111 zum Steuern der Gerätefunktionskomponente 107 auf, die über eine Kommunikationsverbindung mit der Aktuatorsteuerung 109 verbunden sein kann, wie in Fig. 2 schematisch dargestellt. Die Gerätesteuerung 111 kann am Gerätekorpus 101 oder an der Tür 103 angeordnet sein. Die Kommunikationsverbindung kann über eine Leitungsanordnung erfolgen. Insbesondere kann die Kommunikationsleitung ein Teil der Leitungsanordnung sein, welche die Gerätefunktionskomponente 107 mit der Aktuatorsteuerung 109 verbinden kann. Die Gerätesteuerung 111 kann neben der Gerätefunktionskomponente 107 weitere Funktionen des Haushaltsgerätes 100 steuern, beispielsweise die Temperaturregelung in einem Kühlgerät. Gemäß einer weiteren Ausführungsform erflogt die Kommunikation zwischen der Aktuatorsteuerung 109 und der Gerätefunktionskomponente 107 ausschließlich über die Gerätesteuerung 111.

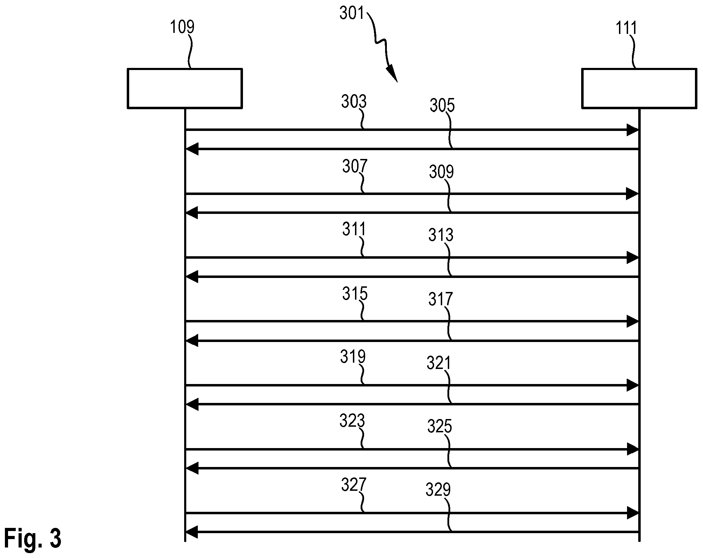

Fig. 3 zeigt ein schematisches Diagramm einer Kommunikation zwischen Komponenten eines Haushaltsgerätes 100 gemäß einer Ausführungsform. Insbesondere zeigt Fig. 3 eine Initialisierungssequenz 301 bestehend aus Parameterabfragen zwischen der Aktuatorsteuerung 109 und der Gerätesteuerung 111.

Gemäß einer Ausführungsform kann die Gerätesteuerung 111 Parameter der Aktuatorsteuerung 109 speichern, beispielsweise die Türoffenhaltezeit oder den Status der Türverriegelung. Hierfür kann die Gerätesteuerung 111 einen Speicher, beispielsweise einen Flash-Speicher, aufweisen. Die Parameter der Aktuatorsteuerung 109 können über die Kommunikationsverbindung von der Aktuatorsteuerung 109 an die Gerätesteuerung 111 übermittelt werden.

Gemäß einer weiteren Ausführungsform kann die Aktuatorsteuerung 109 nach einem Neustart des Haushaltsgerätes 100 oder einem Zurücksetzten der Aktuatorsteuerung 109 diese Parameter in einer Initialisierungssequenz 301 von der Gerätesteuerung 111 Schritt für Schritt abfragen. In Fig. 3 ist eine solche Initialisierungssequenz 301 beispielhaft dargestellt. Die Initialisierungssequenz 301 besteht aus einer Sequenz von Anfragen der Aktuatorsteuerung 109 an die Gerätesteuerung 111. Auf jede Anfrage erfolgt eine Antwort der Gerätesteuerung 111 an die Aktuatorsteuerung 109. Die Initialisierungssequenz 301 in Fig. 3 hat den folgenden Ablauf: In einem ersten Schritt erfolgt eine Anfrage nach der Art des Haushaltsgerätes 303, worauf die Gerätesteuerung 111 mit der Seriennummer 305 antwortet. In einem zweiten Schritt erfolge eine Anfrage nach dem Status der Türverrieglung 307, worauf die Gerätesteuerung 111 mit dem Status "offen" oder "verriegelt" 309 antwortet. In einem dritten Schritt erfolgt eine Anfrage nach dem Status der Aktuatorsteuerung 311, worauf die Gerätesteuerung mit dem Status "aktiviert" oder "deaktiviert" 313 antwortet. In einem vierten Schritt erfolgt eine Anfrage nach dem Arbeitsmodus der Aktuatorsteuerung 315, worauf die Gerätesteuerung mit "Push-" oder "Pull-Modus" 317 antwortet. In einem fünften Schritt erfolgt eine Anfrage nach der Türoffenhaltezeit 319, worauf die Gerätesteuerung mit einer Offenhaltezeit in Sekunden 321, beispielsweise mit 1, 2, 3, 4, 5, 6, 7, 8, 9 oder 10 Sekunden, antwortet. In einem sechsten Schritt erfolgt eine Anfrage nach dem Sensitivitätslevel des Sensors im Push-Modus 323, worauf die Gerätesteuerung beispielsweise mit "hoch", "mittel", oder "niedrig" 325 antwortet. In einem siebten Schritt erfolgt eine Anfrage nach dem Sensitivitätslevel des Sensors im Pull-Modus 327, worauf die Gerätesteuerung beispielsweise mit "hoch", "mittel", oder "niedrig" 329 antwortet.

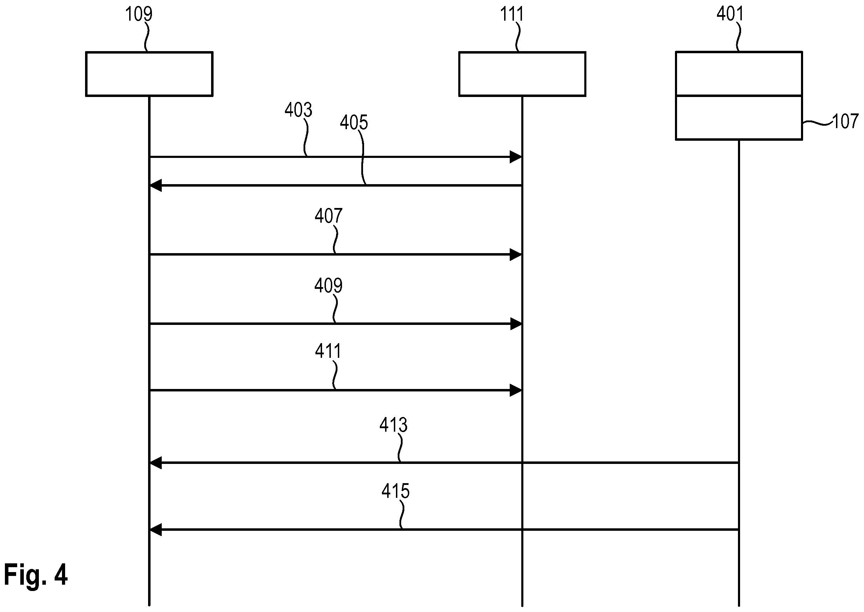

Fig. 4 zeigt ein weiteres schematisches Diagramm einer Kommunikation zwischen Komponenten eines Haushaltsgerätes 100 gemäß einer Ausführungsform. Insbesondere zeigt Fig. 4 eine Kommunikation zwischen der Aktuatorsteuerung 109, der Gerätesteuerung 111 und der Gerätefunktionskomponente 107 mit einer Aktivitätssteuerung 401, beispielsweise einen Tastschalter oder einen berührungssensitiven Anzeigeschirm.

Gemäß einer Ausführungsform können über die Kommunikationsverbindung eine Reihe von Meldungen und/oder Parameterabfragen zwischen der Aktuatorsteuerung 109 und der Gerätesteuerung 111 und/oder der Gerätefunktionskomponente 107 ausgetauscht werden. In Fig. 4 sind eine Parameterabfrage und mehrere Meldungen beispielhaft dargestellt. Bei der Parameterabfrage handelt es sich um eine Selbsttestanfrage 403 der Gerätesteuerung 111 an die Aktuatorsteuerung 109, auf die die Aktuatorsteuerung 109 nach der Durchführung eines Selbsttests mit dem Status "ok" oder einer Fehlermeldung 405 antwortet. Wird dieser Selbsttest im Push-Modus durchgeführt, dann kann die Aktuatorsteuerung 109 die Tür 103 als Teil des Selbsttests einmal öffnen. Bei der ersten Meldung handelt es sich um die Meldung des Türöffnungsstatus 407 von der Aktuatorsteuerung 109 an die Gerätesteuerung 111, beispielsweise "Tür komplett verschlossen" oder "Tür gerade geöffnet". Mit dieser Statusmeldung kann sichergestellt werden, dass die Türverrieglung die Tür 103 nur im geschlossenen Zustand verriegelt. Bei der zweiten Meldung handelt es sich um eine Warnmeldung aufgrund einer verschlossenen Tür 409 von der Aktuatorsteuerung 109 an die Gerätesteuerung 111. Diese Warnmeldung kann beispielsweise erfolgen, wenn die Aktuatorsteuerung 109 ein Aktivierungssignal zum Aktivieren des Türaktuators 105 empfängt während die Türverrieglung aktiv ist. Als Reaktion kann ein akustisches oder optisches Warnsignal ausgegeben werden, wobei das akustische Warnsignal ein durchgehender oder periodischer Ton sein kann und das optische Warnsignal ein Leuchtelement in einer Signalfarbe sein kann. Bei der dritten Meldung handelt es sich um eine Fehlermeldung 411 von der Aktuatorsteuerung 109 an die Gerätesteuerung 111 aufgrund eines Fehlers in der Aktuatorsteuerung 109. Bei der vierten Meldung handelt es sich um einen Aktivierungshinweis 413 von der Gerätefunktionskomponente 107 und/oder der Aktivitätssteuerung 401 an die Aktuatorsteuerung 109. Als Reaktion auf diese Meldung kann die Aktivierung des Türaktuators 105 durch die Aktuatorsteuerung 109 unterbunden werden. Bei der fünften Meldung handelt es sich um einen Deaktivierungshinweis 415 von der Gerätefunktionskomponente 107 und/oder der Aktivitätssteuerung 401 an die Aktuatorsteuerung 109. Als Reaktion auf diese Meldung kann die Reaktivierung des Türaktuators 105 durch die Aktuatorsteuerung 109 erfolgen. Der Deaktivierungshinweises 415 kann beispielsweise 2 Sekunden nach Betätigung der Aktivitätssteuerung 401 erfolgen.

Gemäß einer weiteren Ausführungsform bilden die Gerätesteuerung 111 und die Aktuatorsteuerung 109 ein gemeinsames Steuerelement, welches am Gerätekorpus 101 oder an der Tür 103 angeordnet ist. Dieses gemeinsame Steuerelement ist über Kommunikationsleitungen mit der Gerätefunktionskomponente 107 und dem Türaktuator 105 verbunden. In dem gemeinsamen Steuerelement sind die Parameter der Gerätesteuerung 111 und der Aktuatorsteuerung 109 hinterlegt. Dies kann eine Parameterabfrage zwischen Aktuatorsteuerung 109 und Gerätesteuerung 111, beispielsweise während der Initialisierungssequenz 301, stark vereinfachen, da beide Steuerungen einen gemeinsamen Speicher und Prozessor verwenden können und es zu keinem Informationsaustausch über Kommunikationsleitungen kommen muss.

### Bezugszeichenliste

- 100: Haushaltsgerät
- 101: Gerätekorpus
- 103: Tür
- 105: Türaktuator
- 107: Gerätefunktionskomponente
- 109: Aktuatorsteuerung
- 111: Gerätesteuerung
- 113: Sensor

- 301: Initialisierungssequenz
- 303: Anfrage der Art des Haushaltsgerätes
- 305: Antwort Seriennummer
- 307: Anfrage des Status der Türverrieglung
- 309: Antwort "offen" oder "verriegelt"
- 311: Anfrage des Status der Aktuatorsteuerung
- 313: Antwort "aktiviert" oder "deaktiviert"
- 315: Anfrage des Arbeitsmodus der Aktuatorsteuerung
- 317: Antwort "Push-Modus" oder "Pull-Modus"
- 319: Anfrage der Türoffenhaltezeit
- 321: Antwort Offenhaltezeit in Sekunden
- 323: Anfrage des Sensitivitätslevel des Sensors im Push-Modus
- 325: Antwort "hoch", "mittel", oder "niedrig"
- 327: Anfrage des Sensitivitätslevel des Sensors im Pull-Modus
- 329: Antwort "hoch", "mittel", oder "niedrig"

- 401: Aktivitätssteuerung
- 403: Selbsttestanfrage
- 405: Antwort "ok" oder Fehlermeldung
- 407: Türöffnungsstatus
- 409: Warnmeldung aufgrund einer verschlossenen Tür
- 411: Fehlermeldung
- 413: Aktivierungshinweis
- 415: Deaktivierungshinweis

## Patentansprüche

1. Haushaltsgerät (100) mit einem Gerätekorpus (101), einer an dem Gerätekorpus (101) drehbar gelagerten Tür (103), einem Türaktuator (105) zum Antreiben der Tür (103) in Öffnungs- und/oder Schließrichtung, einer aktivierbaren Gerätefunktionskomponente (107) sowie einer Aktuatorsteuerung (109) zum Aktivieren des Türaktuators (105), wobei die Aktuatorsteuerung (109) ausgebildet ist, einen Aktivitätszustand der Gerätefunktionskomponente (107) zu überwachen, wobei die Aktuatorsteuerung (109) ansprechend auf einen Empfang eines Aktivierungssignals zum Aktivieren des Türaktuators (105) ausgebildet ist, den Türaktuator (105) nur dann zum Antreiben der Tür (3) in Öffnungs- und/oder Schließrichtung zu aktivieren, wenn die aktivierbare Gerätefunktionskomponente (107) inaktiv ist, wobei eine Aktivitätssteuerung (401) der Gerätefunktionskomponente (107) an der Tür (103) angeordnet ist, welche ein Tastschalter oder ein berührungssensitiver Anzeigeschirm ist, **dadurch gekennzeichnet, dass** ein Sensor (113) zum Erfassen einer Betätigung der Tür (103) in Form eines Andrückens der Tür (103) oder eines Ziehens der Tür (103) durch einen Benutzer vorgesehen und ausgebildet ist, das Aktivierungssignal zum Aktivieren des Türaktuators (105) bei Erfassung der Betätigung an die Aktuatorsteuerung (109) auszusenden.

2. Haushaltsgerät (100) nach Anspruch 1, **dadurch gekennzeichnet, dass** die Gerätefunktionskomponente (107) und die Aktuatorsteuerung (109) an eine Kommunikationsleitung, insbesondere an einen Kommunikationsbus, angeschaltet sind.

3. Haushaltsgerät (100) nach einem der vorstehenden Ansprüche, **dadurch gekennzeichnet, dass** die Gerätefunktionskomponente (107) eine Eisausgabekomponente, eine Wasserausgabekomponente oder eine Türverriegelung ist.

4. Haushaltsgerät (100) nach einem der vorstehenden Ansprüche, **dadurch gekennzeichnet, dass** die Sensitivität des Sensors (113) einstellbar ist.

5. Haushaltsgerät (100) nach einem der vorstehenden Ansprüche, **dadurch gekennzeichnet, dass** das Haushaltsgerät (100) eine Gerätesteuerung (111) zum Steuern der Gerätefunktionskomponente (107) aufweist, dass die Aktuatorsteuerung (109) und die Gerätesteuerung (111) kommunikationstechnisch verbunden sind, und dass die Gerätesteuerung (111) ausgebildet ist, den Aktivitätszustand der Gerätefunktionskomponente (107) an die Aktuatorsteuerung (109) zu übermitteln.

6. Haushaltsgerät (100) nach Anspruch 5, **dadurch gekennzeichnet, dass** das die Aktuatorsteuerung (109) ausgebildet ist, eine Mehrzahl von aktuellen Geräteparametern des Haushaltsgerätes (100) oder der Gerätefunktionskomponente (107) von der Gerätesteuerung (111), insbesondere nach elektrischer Einschaltung des Haushaltsgerätes (100) oder nach einer Zurücksetzung des Türaktuators (105), in einer Initialisierungssequenz (301) abzurufen.

7. Haushaltsgerät (100) nach einem der vorstehenden Ansprüche, **dadurch gekennzeichnet, dass** die Gerätefunktionskomponente (107) ausgebildet ist, bei einer Aktivierung der Gerätefunktionskomponente (107) einen Aktivierungshinweis (413) an die Aktuatorsteuerung (109) auszusenden, und dass die Aktuatorsteuerung (109) ausgebildet ist, bei Vorliegen des Aktivierungshinweises (413) von der Gerätefunktionskomponente (107) und bei Empfang des Aktivierungssignals zum Aktivieren des Türaktuators (105) die Aktivierung des Türaktuators (105) zu unterbinden.

8. Haushaltsgerät (100) nach einem der vorstehenden Ansprüche, **dadurch gekennzeichnet, dass** die Aktuatorsteuerung (109) ausgebildet ist, bei Empfang des Aktivierungssignals zum Aktivieren des Türaktuators (105) und bei einer mittels einer Türverriegelung verriegelter Tür ein Warnsignal, insbesondere ein akustisches oder ein optisches Warnsignal, auszugeben.

9. Haushaltsgerät (100) nach einem der vorstehenden Ansprüche, **dadurch gekennzeichnet, dass** die Aktuatorsteuerung (109) ein Bedienfeld zur Parametrisierung des Türaktuators (105) aufweist.

10. Haushaltsgerät (100) nach einem der vorstehenden Ansprüche, **dadurch gekennzeichnet, dass** der Türaktuator (105) mittels des Bedienfeldes manuell deaktivierbar ist.

11. Haushaltsgerät (100) nach einem der vorstehenden Ansprüche, **dadurch gekennzeichnet, dass** die Gerätesteuerung (111) und die Aktuatorsteuerung (109) ein gemeinsames Steuerelement bilden.

12. Verfahren zum Steuern eines Türaktuators zum Antreiben einer Tür (103) eines Haushaltsgerätes (100) in Öffnungs- und/oder Schließrichtung, das einen Gerätekorpus (101), an dem die Tür (103) drehbar gelagert ist, eine Aktuatorsteuerung (109) zum Steuern des Türaktuators (105) und eine aktivierbare Gerätefunktionskomponente (107) aufweist, und dass ein Aktivitätszustand der Gerätefunktionskomponente (107) überwacht wird, wobei die Aktuatorsteuerung (109) ansprechend auf einen Empfang eines Aktivierungssignals zum Aktivieren des Türaktuators (105) ausgebildet ist, wobei der Türaktuator (105) nur dann zum Antreiben der Tür (3) in Öffnungs- und/oder Schließrichtung aktiviert wird, wenn die aktivierbare Gerätefunktionskomponente (107) inaktiv ist, wobei eine Aktivitätssteuerung (401) der Gerätefunktionskomponente an der Tür (103) angeordnet ist, welche ein Tastschalter oder ein berührungssensitiver Anzeigeschirm ist, **dadurch gekennzeichnet, dass** ein Sensor (113) zum Erfassen einer Betätigung der Tür (103) in Form eines Andrückens der Tür (103) oder eines Ziehens der Tür (103) durch einen Benutzer vorgesehen ist, und wobei der Sensor (113) ausgebildet ist, das Aktivierungssignal zum Aktivieren des Türaktuators (105) bei Erfassung der Betätigung an die Aktuatorsteuerung (109) auszusenden, wobei der Türaktuator (105) bei Betätigung der Tür (103) durch ein Andrücken der Tür (103) oder eines Ziehens der Tür (103) aktiviert wird.

## Claims

1. Household appliance (100) with an appliance carcass (101), a door (103) supported in a rotatable manner on the appliance carcass (101), a door actuator (105) for driving the door (103) in an opening and/or closing direction, an activatable appliance function component (107) and an actuator controller (109) for activating the door actuator (105), wherein the actuator controller (109) is configured to monitor an activity status of the appliance function component (107), wherein the actuator controller (109) is configured only to activate the door actuator (105) to drive the door (3) in the opening and/or closing direction when the activatable appliance function component (107) is inactive in response to receipt of an activation signal to activate the door actuator (105), wherein an activity controller (401) of the appliance function component (107) is arranged on the door (103), which is a pushbutton or a touch-sensitive display screen, **characterised in that** a sensor (113) is provided to detect actuation of the door (103) in the form of a pushing of the door (103) or a pulling of the door (103) by a user, and configured to transmit the activation signal to activate the door actuator (105) to the actuator controller (109) on detection of the actuation.

2. Household appliance (100) according to claim 1, **characterised in that** the appliance function component (107) and the actuator controller (109) are linked to a communication line, in particular to a communication bus.

3. Household appliance (100) according to one of the preceding claims, **characterised in that** the appliance function component (107) is an ice dispenser component, a water dispenser component or a door lock.

4. Household appliance (100) according to one of the preceding claims, **characterised in that** the sensitivity of the sensor (113) can be set.

5. Household appliance (100) according to one of the preceding claims, **characterised in that** the household appliance (100) has an appliance controller (111) for controlling the appliance function component (107), the actuator controller (109) and the appliance controller (111) are connected for the purpose of communication and the appliance controller (111) is configured to transmit the activity status of the appliance function component (107) to the actuator controller (109).

6. Household appliance (100) according to claim 5, **characterised in that** the actuator controller (109) is configured to call up a number of current appliance parameters of the household appliance (100) or the appliance function component (107) from the appliance controller (111), in particular after the household appliance (100) has been switched on electrically or after the door actuator (105) has been reset, in an initialisation sequence (301).

7. Household appliance (100) according to one of the preceding claims, **characterised in that** the appliance function component (107) is configured to transmit an activation notification (413) to the actuator controller (109) when the appliance function component (107) is activated and the actuator controller (109) is configured to prevent activation of the door actuator (105) when the activation notification (413) from the appliance function component (107) is present and the activation signal to activate the door actuator (105) is received.

8. Household appliance (100) according to one of the preceding claims, **characterised in that** the actuator controller (109) is configured to output a warning signal, in particular an acoustic or optical warning signal, when the activation signal to activate the door actuator (105) is received and the door is locked by means of a door lock.

9. Household appliance (100) according to one of the preceding claims, **characterised in that** the actuator controller (109) has an operating panel for parameterising the door actuator (105).

10. Household appliance (100) according to one of the preceding claims, **characterised in that** the door actuator (105) can be deactivated manually by means of the operating panel.

11. Household appliance (100) according to one of the preceding claims, **characterised in that** the appliance controller (111) and the actuator controller (109) form a common control element.

12. Method for controlling a door actuator for driving a door (103) of a household appliance (100) in an opening and/or closing direction, which has an appliance carcass (101), on which the door (103) is supported in a rotatable manner, an actuator controller (109) for controlling the door actuator (105) and an activatable appliance function component (107), and an activity status of the appliance function component (107) is monitored, wherein the actuator controller (109) is configured accordingly to activate the door actuator in response to receipt of an activation signal, wherein the door actuator (105) is only activated to drive the door (3) in the opening and/or closing direction when the activatable appliance function component (107) is inactive, wherein an activity controller (401) of the appliance function component is arranged on the door (103), which is a pushbutton or a touch-sensitive display screen, **characterised in that** a sensor (113) is provided to detect actuation of the door (103) in the form of a pushing of the door (103) or a pulling of the door (103) by a user, and wherein the sensor (113) is configured to transmit the activation signal to activate the door actuator (105) to the actuator controller (109) on detection of the actuation, wherein the door actuator (105) is activated on actuation of the door (103) by a pushing of the door (103) or a pulling of the door (103).

## Revendications

1. Appareil ménager (100) avec un corps d'appareil (101), une porte (103) logée en rotation sur le corps d'appareil (101), un actionneur de porte (105) pour actionner la porte (103) dans le sens d'ouverture et/ou de fermeture, un composant fonctionnel d'appareil activable (107) ainsi qu'une commande d'actionneur (109) pour activer l'actionneur de porte (105), dans lequel la commande d'actionneur (109) est formée afin de surveiller un état d'activité du composant fonctionnel d'appareil (107), dans lequel la commande d'actionneur (109) est formée, en réaction à une réception d'un signal d'activation pour l'activation de l'actionneur de porte (105), afin d'activer l'actionneur de porte (105) à actionner la porte (3) dans le sens d'ouverture et/ou de fermeture uniquement lorsque le composant fonctionnel d'appareil (107) est inactif, dans lequel une commande d'activité (401) du composant fonctionnel d'appareil (107) est disposé sur la porte (103) et consiste en un bouton-poussoir ou en un écran d'affichage tactile, **caractérisé en ce qu'**un capteur (113) pour la détection d'un actionnement de la porte (103) sous la forme d'une pression exercée sur la porte (103) ou d'une traction exercée sur la porte (103) par un utilisateur est prévu et formé afin d'émettre à destination de la commande d'actionneur (109) le signal d'activation pour l'activation de l'actionneur de porte (105) lors de la détection de l'actionnement.

2. Appareil ménager (100) selon la revendication 1, **caractérisé en ce que** le composant fonctionnel d'appareil (107) et la commande d'actionneur (109) sont connectés à une ligne de communication, en particulier à un bus de communication.

3. Appareil ménager (100) selon l'une des revendications précédentes, **caractérisé en ce que** le composant fonctionnel d'appareil (107) est un composant distributeur de glace, un composant distributeur d'eau ou un verrouillage de porte.

4. Appareil ménager (100) selon l'une des revendications précédentes, **caractérisé en ce que** la sensibilité du capteur (113) est réglable.

5. Appareil ménager (100) selon l'une des revendications précédentes, **caractérisé en ce que** l'appareil ménager (100) présente une commande d'appareil (111) pour commander le composant fonctionnel d'appareil (107), **en ce que** la commande d'actionneur (109) et la commande d'appareil (111) sont reliées à des fins de communication et **en ce que** la commande d'appareil (111) est formée afin de transmettre l'état d'activité du composant fonctionnel d'appareil (107) à la commande d'actionneur (109).

6. Appareil ménager (100) selon la revendication 5, **caractérisé en ce que** la commande d'actionneur (109) est formée afin de consulter une pluralité de paramètres d'appareil actuels de l'appareil ménager (100) ou du composant fonctionnel d'appareil (107) de la commande d'appareil (111), en particulier après mise en circuit électrique de l'appareil ménager (100) ou après une réinitialisation de l'actionneur de porte (105), dans une séquence d'initialisation (301).

7. Appareil ménager (100) selon l'une des revendications précédentes, **caractérisé en ce que** le composant fonctionnel d'appareil (107) est formé afin d'émettre, lors d'une activation du composant fonctionnel d'appareil (107), une indication d'activation (413) à destination de la commande d'actionneur (109) et **en ce que** la commande d'actionneur (109) est formée afin d'empêcher l'activation de l'actionneur de porte (105) en présence de l'indication d'activation (413) du composant fonctionnel d'appareil (107) et lors de la réception du signal d'activation pour l'activation de l'actionneur de porte (105).

8. Appareil ménager (100) selon l'une des revendications précédentes, **caractérisé en ce que** la commande d'actionneur (109) est formée afin d'émettre, lors de la réception du signal d'activation pour l'activation de l'actionneur de porte (105) et en présence d'une porte verrouillée au moyen d'un verrouillage de porte, un signal d'avertissement, en particulier un signal d'avertissement acoustique ou optique.

9. Appareil ménager (100) selon l'une des revendications précédentes, **caractérisé en ce que** la commande d'actionneur (109) présente un panneau de commande pour le paramétrage de l'actionneur de porte (105).

10. Appareil ménager (100) selon l'une des revendications précédentes, **caractérisé en ce que** l'actionneur de porte (105) peut être désactivé manuellement au moyen du panneau de commande.

11. Appareil ménager (100) selon l'une des revendications précédentes, **caractérisé en ce que** la commande d'appareil (111) et la commande d'actionneur (109) constituent un élément de commande conjoint.

12. Procédé de commande d'un actionneur de porte pour actionner une porte (103) d'un appareil ménager (100) dans le sens d'ouverture et/ou de fermeture, lequel comprend un corps d'appareil (101), sur lequel la porte (103) est logée en rotation, une commande d'actionneur (109) pour commander l'actionneur de porte (105) et un composant fonctionnel d'appareil activable (107) et en ce qu'un état d'activité du composant fonctionnel d'appareil (107) est surveillé, dans lequel la commande d'actionneur (109) est formée afin d'activer l'actionneur de porte (105) en réaction à une réception d'un signal d'activation, dans lequel l'actionneur de porte (105) est uniquement activé afin d'actionner la porte (3) dans le sens d'ouverture et/ou de fermeture lorsque le composant fonctionnel d'appareil (107) est inactif, dans lequel une commande d'activité (401) du composant fonctionnel d'appareil (107) est disposée sur la porte (103) et consiste en un bouton-poussoir ou un écran d'affichage tactile, **caractérisé en ce qu'**un capteur (113) pour la détection d'un actionnement de la porte (103) sous la forme d'une pression exercée sur la porte (103) ou d'une traction exercée sur la porte (103) par un utilisateur est prévu et dans lequel le capteur (113) est formé afin d'émettre à destination de la commande d'actionneur (109) le signal d'activation pour l'activation de l'actionneur de porte (105) lors de la détection de l'actionnement, dans lequel l'actionneur de porte (105) est activé lors de l'actionnement de la porte (103) sous la forme d'une pression exercée sur la porte (103) ou d'une traction exercée sur la porte (103).
